(19) Europäisches Patentamt
European Patent Office
Office européen des brevets

(11) **EP 3 550 644 A2**

(12) **EUROPEAN PATENT APPLICATION**
published in accordance with Art. 153(4) EPC

(43) Date of publication:
09.10.2019 Bulletin 2019/41

(51) Int Cl.:
*H01M 4/36* (2006.01)   *H01M 4/525* (2010.01)
*H01M 10/0525* (2010.01)   *C01G 53/04* (2006.01)

(21) Application number: 17878046.6

(22) Date of filing: 29.11.2017

(86) International application number:
PCT/KR2017/013841

(87) International publication number:
WO 2018/105945 (14.06.2018 Gazette 2018/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 05.12.2016 KR 20160164541

(71) Applicants:
• Posco
Pohang-si, Gyeongsangbuk-do 37859 (KR)
• Research Institute of Industrial Science &
Technology
Pohang-si, Gyeongsangbuk-do 37673 (KR)

(72) Inventors:
• NAM, Sang Cheol
Seoul 02587 (KR)
• SONG, Jung Hoon
Seoul 06943 (KR)

(74) Representative: Potter Clarkson
The Belgrave Centre
Talbot Street
Nottingham NG1 5GG (GB)

(54) **POSITIVE ELECTRODE ACTIVE MATERIAL PRECURSOR AND PREPARATION METHOD THEREFOR, POSITIVE ELECTRODE ACTIVE MATERIAL AND PREPARATION METHOD THEREFOR, AND LITHIUM SECONDARY BATTERY COMPRISING POSITIVE ELECTRODE ACTIVE MATERIAL**

(57)   This proposes a minimum core radius for nickel-based metal hydroxide particles having a core-shell gradient (CSG) in which a concentration of nickel in a core portion is constantly maintained and a concentration of nickel in a shell portion is sharply decreased.

FIG. 1

**Description**

**[Technical Field]**

This relates to a positive electrode active material precursor and a preparation method thereof, a positive electrode active material and a preparation method thereof, and a lithium rechargeable battery including the positive electrode active material.

**[Background Art]**

A positive electrode active material, which is one of constituent elements of a lithium rechargeable battery, not only directly contributes to performance of battery energy, but also serves as a factor in determining a cycle-life characteristic.

In this connection, studies on nickel-based lithium metal oxides having a layered structure such as so-called NCM have been actively performed, and an increase in a content of nickel (Ni) may lead to higher capacity.

However, if a molar content of nickel in the nickel-based lithium metal oxide is increased to 80 % or more, the structure becomes unstable. To solve this problem, methods such as doping, coating, and formation of a concentration gradient are known.

However, for nickel-based lithium metal oxide particles having an unstable structure, uniformly doping interiors thereof or uniformly coating surfaces thereof is very difficult. It is also known that nickel-based lithium metal oxide particles having a concentration gradient have an average molar content of nickel that is varied depending on the particle size thereof.

In the meantime, attempts have been made to increase energy density of the positive electrode by mixing two kinds of positive electrode active materials having different particle sizes at a certain ratio. This is a technique that is capable of integrating a large amount of positive electrode active material within a unit volume by filling gaps between large-size particles (hereinafter referred to as "large diameter particles") with small-size particles (hereinafter referred to as "small diameter particles") by a so-called bi-modal technique.

It is first necessary to prepare large diameter particles and small diameter particles in order to implement such bi-modal technique. However, it is known that it is difficult to uniformly control internal composition in the case of large diameter particles of 5 μm or more, and further it is very difficult to uniformly control an average molar content of nickel, a shape of the concentration gradient, the doping, the surface coating, and the like for each particle size.

**[Disclosure]**

In order to solve the above-mentioned problems, the present invention proposes a minimum core radius to be implemented as a large diameter active material for nickel-based metal hydroxide particles having a core-shell gradient (CSG) in which a concentration of nickel in a core portion is constantly maintained and a concentration of nickel in a shell portion is sharply decreased.

An exemplary embodiment of the present invention provides a positive electrode active material precursor for a lithium rechargeable battery, including: a core portion having a constant molar content of nickel; and a shell portion surrounding an outer surface of the core portion and having a concentration gradient in which a molar content of nickel gradually decreases in a direction from an interface with the core portion to an outermost portion thereof, wherein the positive electrode active material precursor includes a nickel-based metal hydroxide particle having a value of 50 % or more of Formula 1:

$$[\text{Formula 1}] \quad R1/(R1+D1)*100\ \%$$

wherein, in Formula 1, R1 indicates a radius of the core portion in the nickel-based metal hydroxide particle, and D1 indicates a thickness of the shell portion in the nickel-based metal hydroxide particle.

Specifically, a value of Formula 1 may be greater than or equal to 75 %.

An average composition of the nickel-based metal hydroxide particle may be represented by Chemical Formula 1:

[Chemical Formula 1]      $Ni_{1-w1-x1-y1-z1}Co_{w1}M1_{x1}M2_{y1}M3_{z1}(OH)_{2-p1}X_{p1}$

wherein, in Chemical Formula 1, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, and each of w1, x1, y1, z1, and p1 may satisfy a following corresponding inequality: $0 < w1 \leq 0.2$, $0 < x1 \leq 0.2$, $0 \leq y1 \leq 0.1$, $0 \leq z1 \leq 0.1$, $0 < w1+x1+y1+z1 \leq 0.4$, and $0 \leq p1 \leq 0.1$.

In this case, a composition of the core portion in the nickel-based metal hydroxide particle may be represented by Chemical Formula 2 in an entire region:

[Chemical Formula 2] $\quad Ni_{1-w2-x2-y2-z2}Co_{w2}M1_{x2}M2_{y2}M3_{z2}(OH)_{2-p2}X_{p2}$

wherein, in Chemical Formula 2, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, and each of w2, x2, y2, z2, and p2 may satisfy a following corresponding inequality: $0 \leq w2 \leq 0.1$, $0 \leq x2 \leq 0.1$, $0 \leq y2 \leq 0.1$, $0 \leq z2 < 0.1$, $0 \leq w2+x2+y2+z2 \leq 0.2$, and $0 \leq p2 \leq 0.05$.

In addition, a composition of the shell portion in the nickel-based metal hydroxide particle may represented by Formula 2 at the interface, and may be represented by Formula 3 at the outermost portion, wherein molar contents of nickel (Ni), M1, M2, and M3 gradually change from the interface to the outermost portion:

[Chemical Formula 3] $\quad Ni_{1-w3-x3-y3-z3}Co_{w3}M1_{x3}M2_{y3}M3_{z3}(OH)_{2-p3}X_{p3}$

wherein, in Chemical Formula 3, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, and each of w3, x3, y3, z3, and p3 may satisfy a following corresponding inequality: $0 < w3 \leq 0.3$, $0 < x3 \leq 0.3$, $0 \leq y3 \leq 0.1$, $0 \leq z3 \leq 0.1$, $0 < w3+x3+y3+z3 \leq 0.5$, and $0 \leq p3 \leq 0.1$.

The nickel-based metal hydroxide particles may have a diameter of 10 to 30 $\mu m$.

An exemplary embodiment of the present invention provides a preparation method of a positive electrode active material precursor for a lithium rechargeable battery, including: a preparation step of a first metal salt aqueous solution and a second metal salt aqueous solution, each of which contains a nickel source material, a dissimilar metal source material, and water, wherein molar concentrations of the nickel source material are different in the first metal salt aqueous solution and the second metal salt aqueous solution; a first co-precipitation step of forming a core portion by supplying the first metal salt aqueous solution to a reactor having a pH that is constantly maintained, and to which a chelating agent is supplied; and a second co-precipitation step of forming a shell portion surrounding an outer surface of the core portion by gradually decreasing a supply rate of the first metal salt aqueous solution and by gradually increasing a supply rate of the second metal salt aqueous solution, after the first co-precipitation step, wherein a nickel-based metal hydroxide particle including the core portion and the shell portion may be obtained in the second co-precipitation step, and the first co-precipitation step and the second co-precipitation step are controlled to obtain a value of 50 % or more of Formula 1 for the obtained nickel-based metal hydroxide particle:

$$[\text{Formula 1}] \quad R1/(R1+D1)*100\ \%$$

wherein, in Formula 1, R1 indicates a radius of the core portion in the nickel-based metal hydroxide particle, and D1 indicates a thickness of the shell portion in the nickel-based metal hydroxide particle.

Specifically, the first co-precipitation step and the second co-precipitation step may be controlled to satisfy Formula 2:

$$[\text{Formula 2}] \quad \log T1/\log (T1 + T2) \approx R1/(R1 + D1)$$

wherein, in Formula 2, T1 is an execution time of the first co-precipitation step, and T2 is an execution time of the second co-precipitation step.

More specifically, the first co-precipitation step may be performed for 10 hours or more. Accordingly, particles having a radius of R1 from a center and a constant molar content in the entire region may be precipitated.

In addition, in the second co-precipitation step, shell portions may be formed by using the particles precipitated in the first co-precipitation step as core portions to have a thickness of R2 from surfaces of the core portions and a molar content of nickel that gradually decreases in a thickness direction from interfaces with the surfaces of the core portions, and nickel-based metal hydroxide particles formed to include the core portion and the shell portion may be obtained.

An exemplary embodiment of the present invention provides a positive electrode active material for a lithium rechargeable battery, including: a core portion having a constant molar content of nickel; and a shell portion surrounding an outer surface of the core portion and having a concentration gradient in which a molar content of nickel gradually decreases in a direction from an interface with the core portion to an outermost portion thereof, wherein the positive electrode active material precursor includes a nickel-based lithium metal oxide particle having a value of 50 % or more of Formula 3:

$$[Formula\ 3]\quad R2/\ (R2+D2)*100\ \%$$

wherein, in Formula 3, R2 indicates a radius of the core portion in the nickel-based metal oxide particle, and D2 indicates a thickness of the shell portion in the nickel-based metal oxide particle.

Specifically, an average composition of the nickel-based lithium metal oxide particle may be represented by Chemical Formula 4:

$$[Chemical\ Formula\ 4]\quad Li_{1+m}[Ni_{1-w4-x4-y4-z4}Co_{w4}M1_{x4}M2_{y4}M3_{z4}]_{1-m}O_{2-p4}X_{p4}$$

wherein, in Chemical Formula 4, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, each of w4, x4, y4, z4, and p4 may satisfy a following corresponding inequality: $0 < w4 \le 0.2$, $0 < x4 \le 0.2$, $0 \le y4 \le 0.1$, $0 \le z4 \le 0.1$, $0 < w4+x4+y4+z4 \le 0.4$, and $0 \le p1 \le 0.1$, and m may satisfy an inequality: $-0.05 \le m \le 0.25$.

In this case, a composition of the core portion in the nickel-based lithium metal oxide particle may be represented by Chemical Formula 5 in an entire region:

$$[Chemical\ Formula\ 5]\quad Li_{1+m}[Ni_{1-w5-x5-y5-z5}Co_{w5}M1_{x5}M2_{y5}M3_{z5}]_{1-m}O_{2-p5}X_{p5}$$

wherein, in Chemical Formula 5, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, each of w5, x5, y5, z5, and p5 may satisfy a following corresponding inequality: $0 \le w5 \le 0.1$, $0 \le x5 <0.1$, $0 \le y5 \le 0.1$, $0 \le z5 \le 0.1$, $0 \le w5+x5+y5+z5 \le 0.2$, and $0 \le p5 \le 0.1$, and m may satisfy an inequality: $-0.05 \le m \le 0.25$.

In addition, a composition of the shell portion in the nickel-based lithium metal oxide particle may be represented by Formula 5 at the interface, and is represented by Formula 6 at the outermost portion, wherein molar contents of nickel (Ni), M1, M2, and M3 gradually change from the interface to the outermost portion:

$$[Chemical\ Formula\ 6]\quad Li_{1+m}[Ni_{1-w6-x6-y6-z6}Co_{w6}M1_{x6}M2_{y6}M3_{z6}]_{1-m}O_{2-p6}X_{p6}$$

wherein, in Chemical Formula 6, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, each of w6, x6, y6, z6, and p6 may satisfy a following corresponding inequality: $0 < w6 \le 0.3$, $0 < x6 \le 0.3$, $0 \le y6 \le 0.1$, $0 \le z6 \le 0.1$, $0 < w6+x6+y6+z6 \le 0.5$, and $0 \le p6 \le 0.1$, and m satisfies an inequality: $-0.05 \le m \le 0.25$.

More specifically, a value of Formula 2 may be greater than or equal to 75 %.

Meanwhile, the positive electrode active material may further include a coating layer configured to surround an outer surface of the shell portion and to contain at least one of an element of B, Mg, Zr, Al, Mn, Co, or a combination thereof; an oxide of the element; an amorphous compound thereof; a lithium ion conductive oxide thereof (e.g., lithium borate or lithium borosilicate); and a polymer thereof.

An exemplary embodiment of the present invention provides a preparation method of a positive electrode active material for a lithium rechargeable battery, including: a preparation step of a first metal salt aqueous solution and a second metal salt aqueous solution, each of which contains a nickel source material, a dissimilar metal source material, and water, wherein molar concentrations of the nickel source material are different in the first metal salt aqueous solution and the second metal salt aqueous solution; a first co-precipitation step of forming a core portion by supplying the first metal salt aqueous solution to a reactor having a pH that is constantly maintained, and to which a chelating agent is supplied; and a second co-precipitation step of forming a shell portion surrounding an outer surface of the core portion by gradually decreasing a supply rate of the first metal salt aqueous solution and by gradually increasing a supply rate of the second metal salt aqueous solution, after the first co-precipitation step, wherein a nickel-based metal hydroxide particle including the core portion and the shell portion may be obtained in the second co-precipitation step, and the first co-precipitation step and the second co-precipitation step are controlled to obtain a value of 50 % or more of Formula 1 for the obtained nickel-based metal hydroxide particle, and an obtaining step of a nickel-based lithium metal oxide particle by calcining a mixture of the nickel-based metal hydroxide particle and a lithium source material, after the second co-precipitation step:

$$[Formula\ 1]\quad R1/\ (R1+D1)*100\ \%$$

wherein, in Formula 1, R1 indicates a radius of the core portion in the nickel-based metal hydroxide particle, and D1 indicates a thickness of the shell portion in the nickel-based metal hydroxide particle.

Specifically, the dissimilar metal source material may include one of a Co source material, a Mn source material, an Al source material, a Mg source material, a Zr source material, a Sn source material, a Ca source material, a Ge source material, a Ga source material, a B source material, a Ti source material, a Mo source material, a Nb source material, and a W source material, or a mixture of two or more thereof.

The preparation method may further include a forming step of a coating layer surrounding an outer surface of the nickel-based lithium metal oxide particle, after the obtaining step of the nickel-based lithium metal oxide particle.

Specifically, the forming step of the coating layer surrounding the outer surface of the nickel-based lithium metal oxide particle may include: a mixing step of the nickel-based lithium metal oxide particle and a coating source material; and a heat-treating step of a mixture of the nickel-based lithium metal oxide particle and a coating source material.

An exemplary embodiment of the present invention provides a lithium rechargeable battery including: a positive electrode; a negative electrode; and an electrolyte.

For a nickel-based metal hydroxide particle having a CSG-type concentration gradient, it is possible to uniformly control an internal composition for each particle size (an average molar content of nickel, a form of the concentration gradient, etc.) by suggesting a minimum core radius to be embodied as a large particle-diameter active material.

[Description of the Drawings]

FIG. 1 schematically illustrates a profile for each Ni content in Example 1 and Comparative Example 2.

FIG. 2A and FIG. 2B respectively illustrate particle size analysis (PSA) results for each positive electrode active material before classification in Example 2 and Comparative Example 2.

FIG. 3A to FIG. 3E respectively illustrate SEM photographs for each diameter classified in Example 2 (however, scale bars in FIG. 3A to FIG. 3E are 50 $\mu$m).

FIG. 4A to FIG. 4D respectively illustrate SEM photographs for each diameter classified in Comparative Example 2 (however, scale bars in FIG. 4A to FIG. 4D are 20 $\mu$m).

FIG. 5A illustrates results of measuring DSC thermal characteristics for each positive electrode active material before (reference) and after classification in Example 2.

FIG. 5B illustrates results of measuring DSC thermal characteristics for each positive electrode active material before (reference) and after classification in Comparative Example 2.

FIG. 6 illustrates results of measuring a DC-IR increase ratio of a positive electrode active material before classification according to Example 2 and Comparative Example 2.

[Mode for Invention]

Hereinafter, exemplary embodiments of the present invention will be described in detail. However, it should be understood that the exemplary embodiments are merely examples, the present invention is not limited thereto, and the present invention is only defined by the scope of the following claims.

In this specification, particle size D0.9 indicates a particle size when active material particles having various particle sizes such as 0.1, 0.2, 0.3, ..., 3, 5, 7, ..., 10, 20, and 30 $\mu$m are accumulated up to a 0.9 % by volume ratio, D10 indicates a particle size when they are accumulated up to a 10 % by volume ratio, D50 indicates a particle size when they are accumulated up to a 50 % by volume ratio, D6 indicates a particle size when they are accumulated up to a 6 % by volume ratio, and D95 indicates a particle size when they are accumulated up to a 95 % by volume ratio.

Positive electrode active material precursor

An exemplary embodiment of the present invention provides a positive electrode active material precursor for a lithium rechargeable battery, including: a core portion having a constant molar content of nickel; and a shell portion surrounding an outer surface of the core portion and having a concentration gradient in which a molar content of nickel gradually decreases in a direction from an interface with the core portion to an outermost portion thereof, wherein the positive electrode active material precursor includes a nickel-based metal hydroxide particle having a value of 50 % or more of Formula 1:

$$[\text{Formula 1}]\ R1/\ (R1+D1)*100\ \%$$

wherein, in Formula 1, R1 indicates a radius of the core portion in the nickel-based metal hydroxide particle, and D1 indicates a thickness of the shell portion in the nickel-based metal hydroxide particle.

The positive electrode active material precursor provided in the present exemplary embodiment includes a nickel-based metal hydroxide particle having a core-shell gradient (CSG) having the core portion in which a high concentration of nickel is constantly maintained and the shell portion in which the concentration of nickel is sharply reduced. Specifically, the CSG type is advantageous for stabilizing a structure by maintaining the molar content of nickel in the core portion at a high level to increase capacity and by increasing a molar content of a dissimilar metal (e.g., Mn, Co, Al, or the like) while reducing the molar content of nickel in the shell portion.

Further, in the exemplary embodiment of the present invention, for a nickel-based metal hydroxide particle having the CSG-type, it is possible to uniformly control an internal composition (an average molar content of nickel, a form of the concentration gradient, etc.) for each particle size by suggesting a minimum core radius to be embodied as a large particle-diameter active material through Formula 1.

Generally, a nickel-based metal hydroxide water particle having a concentration gradient is prepared by a co-precipitation method by using a batch-type reactor.

Accordingly, a plurality of nickel-based metal hydroxide particles having a narrow Gaussian distribution are prepared, as compared with a case of using a continuous stirred-tank reactor (CSTR).

Nevertheless, the nickel-based metal hydroxide particles prepared to have the concentration gradient by using the batch-type reactor have the internal composition (an average molar content of nickel, a form of a concentration gradient, etc.) that is different depending on sizes thereof.

This problem is exacerbated when the nickel-based metal hydroxide particles having a large size are prepared, and thus the internal composition for each particle size of the large-diameter particles is nonuniform, resulting in the restriction of implementation of the bi-modal active material.

More specifically, a step of forming the core portion by supplying the first metal salt aqueous solution to a reactor having a pH that is constantly maintained, to which a chelating agent is supplied at a constant rate, is referred to as a first co-precipitation step for convenience sake. After the first co-precipitation step, a shell portion may be continuously formed on a surface of the core portion by gradually decreasing a supply rate of the first metal salt aqueous solution and by gradually increasing a supply rate of the second metal salt aqueous solution. This step is referred to as a second co-precipitation step for convenience sake. As a result, a plurality of nickel-based metal hydroxide particles having diameters that form a Gaussian distribution may be obtained, and each particle may have a CSG form.

Generally, it is known that the first co-precipitation step is performed for about 5 hours, and the first co-precipitation step and the second co-precipitation step are performed for a total of about 20 hours, to obtain a plurality of nickel-based metal hydroxide particles having a value of less than 50 % of Formula 1. In this case, as described above, the internal composition (an average molar content of nickel, a form of a concentration gradient, etc.) is different depending on the sizes of the particles because supply tanks of metal salt aqueous solution are connected in series.

On the other hand, as in another exemplary embodiment of the present invention to be described later, a plurality of nickel-based metal hydroxide particles having a value of 50 % or more of Formula 1 may be obtained by appropriately adjusting an execution time of the first co-precipitation step and a total execution time of the first co-precipitation step and the second co-precipitation step. In this case, the internal composition (an average molar content of nickel, a form of a concentration gradient, etc.) may be made uniform, even when nickel-based metal hydroxide particles having a large size are prepared by using supply tanks that are connected in series. Specifically, in the exemplary embodiment of the present invention, the value of Formula 1 may be 60 % or more, 70 % or more, or 75 % or more as in examples to be described below.

A detailed process will be described later, and a positive electrode active material precursor including the nickel-based metal hydroxide particles will now be described in detail.

Size of nickel-based metal hydroxide particles

The nickel-based metal hydroxide particles may be a large particle-diameter active material precursor having a D50 of 10 to 30 $\mu$m in order to realize a large particle-diameter active material and a bi-modal active material based thereon.

Internal composition of nickel-based metal hydroxide particles

The nickel-based metal hydroxide particles may have an average composition represented by the following Formula 1 for each particle size of, e.g., D50.

[Chemical Formula 1] $$Ni_{1-w1-x1-y1-z1}Co_{w1}M1_{x1}M2_{y1}M3_{z1}(OH)_{2-p1}X_{p1}$$

In Chemical Formula 1, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, and each of w1, x1, y1, z1, and p1 may satisfy a following corresponding inequality: $0 < w1 \leq 0.2$, $0 < x1 \leq 0.2$, $0 \leq y1 \leq 0.1$, $0 \leq z1 \leq 0.1$, $0 < w1 +x1+y1+z1 \leq 0.4$, and $0 \leq p1 \leq 0.1$.

This indicates that an average molar content of nickel is a high concentration of 60 % or more in an entire region of the nickel-based metal hydroxide particle including the core portion and the shell portion.

For example, in Formula 1, M1 may be Mn, and following inequalities $0 < w1 \leq 0.1$, $0 < x1 \leq 0.1$, $y1 = z1 = p1 = 0$, and $0 < w1+x1+y1+z1 \leq 0.2$ may be satisfied.

More specifically, the nickel-based metal hydroxide particle may have an average composition of the core portion represented by following Formula 2 for each particle size of, e.g., D50:

[Chemical Formula 2] $\quad Ni_{1-w2-x2-y2-z2}Co_{w2}M1_{x2}M2_{y2}M3_{z2}(OH)_{2-p2}X_{p2}$

wherein, in Chemical Formula 2, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, and each of w2, x2, y2, z2, and p2 may satisfy a following corresponding inequality: $0 \leq w2 \leq 0.1$, $0 \leq x2 \leq 0.1$, $0 \leq y2 \leq 0.1$, $0 \leq z2 \leq 0.1$, $0 \leq w2+x2+y2+z2 \leq 0.2$, and $0 \leq p2 \leq 0.05$.

This indicates that the molar content of nickel in the entire region of the core portion in the nickel-based metal hydroxide particle is 80 % or more, which is higher than the average composition.

For example, in Formula 2, M1 may be Mn, and following inequalities $0 < w2 \leq 0.05$, $0 < x2 \leq 0.05$, $y2 = z2 = p2 = 0$, and $0 < w2+x2+y2+z2 \leq 0.1$ may be satisfied.

In addition, the nickel-based metal hydroxide particle may be represented by Formula 2 at the interface with the core portion for each particle size of, e.g., D50, and is represented by Formula 3 at the outermost portion, wherein molar contents of nickel (Ni), M1, M2, and M3 gradually change from the interface to the outermost portion:

[Chemical Formula 3] $\quad Ni_{1-w3-x3-y3-z3}Co_{w3}M1_{x3}M2_{y3}M3_{z3}(OH)_{2-p3}X_{p3}$

wherein, in Chemical Formula 3, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, and each of w3, x3, y3, z3, and p3 may satisfy a following corresponding inequality: $0 < w3 \leq 0.3$, $0 < x3 \leq 0.3$, $0 \leq y3 < 0.1$, $0 \leq z3 \leq 0.1$, $0 < w3+x3+y3+z3 \leq 0.5$, and $0 \leq p3 \leq 0.1$.

This indicates that the molar content of nickel is 80 % or more at the interface with the core portion and is 60 % or more in the outermost portion in the nickel-based metal hydroxide particle, and having a concentration gradient in which the molar content of nickel gradually decreases from the interface to the outermost portion. In addition, the metals (i.e., M1, M2, and M3) other than nickel have a concentration gradient in which the molar content gradually increases from the interface to the outermost portion.

For example, in Formula 3, M1 may be Mn, and following inequalities $0 < w3 \leq 0.25$, $0 < x3 \leq 0.25$, $y3 = z3 = p3 = 0$, and $0 < w3+x3+y3+z3 \leq 0.5$ may be satisfied.

The nickel-based metal hydroxide particle may have a stable structure according to a composition of the shell portion of Formula 3 while accomplishing a high capacity according to a total composition of Formula 1 and a composition of the core portion of Formula 2.

## Preparation method of positive electrode active material precursor

An exemplary embodiment of the present invention provides a preparation method of a positive electrode active material precursor for a lithium rechargeable battery, including: a preparation step of a first metal salt aqueous solution and a second metal salt aqueous solution, each of which contains a nickel source material, a dissimilar metal source material, and water, wherein molar concentrations of the nickel source material are different in the first metal salt aqueous solution and the second metal salt aqueous solution; a first co-precipitation step of forming a core portion by supplying the first metal salt aqueous solution to a reactor having a pH that is constantly maintained, to which a chelating agent is supplied; and a second co-precipitation step of forming a shell portion surrounding an outer surface of the core portion by gradually decreasing a supply rate of the first metal salt aqueous solution and by gradually increasing a supply rate of the second metal salt aqueous solution after the first co-precipitation step, wherein a nickel-based metal hydroxide particle including the core portion and the shell portion may be obtained in the second co-precipitation step, and the first co-precipitation step and the second co-precipitation step are controlled to obtain a value of 50 % or more of Formula 1 for the obtained nickel-based metal hydroxide particle:

## [Formula 1]R1/ (R1+D1)*100 %

wherein, in Formula 1, R1 indicates a radius of the core portion in the nickel-based metal hydroxide particle, and D1 indicates a thickness of the shell portion in the nickel-based metal hydroxide particle.

Specifically, an execution time of the first co-precipitation step may be proportional to the radius R1 of the core portion, and a formation time of the shell portion may be proportional to the thickness D1 of the shell portion.

In this regard, the first co-precipitation step and the second co-precipitation step may be controlled to satisfy Formula 2:

$$\text{[Formula 2] } \log T1/\log (T1 + T2) \approx R1/(R1 + D1)$$

wherein, in Formula 2, T1 is an execution time of the first co-precipitation step, and T2 is an execution time of the second co-precipitation step.

Hereinafter, process characteristics of each of the above steps will be described except for the description overlapping with that described above.

Execution times of first co-precipitation step and second co-precipitation step

The execution times of the first co-precipitation step and the execution time of the second co-precipitation step may be appropriately controlled such that the value of Formula 1 is 50 % or more, specifically 60 % or more, 70 % or more, or 75 % or more, as in examples to be described later.

First co-precipitation step (core portion formation step)

Specifically, the first co-precipitation step may be performed for 10 hours or more. Accordingly, particles having a radius of R1 from a center and a constant molar content in the entire region may be precipitated.

This is generally twice as long as a time required to adjust a core portion formation time to about 5 hours. It is advantageous to prepare a large particle-diameter active material having a uniformly controlled internal composition (an average molar content of nickel, a form of the concentration gradient, etc.) for each particle size by performing the second co-precipitation step that satisfies Formula 2 while forming a core portion with a long radius by performing the first co-precipitation step for 10 hours or more.

Meanwhile, the first metal salt aqueous solution used in the first co-precipitation step may be a mixture of a nickel source material, a dissimilar metal source material, and water so as to satisfy a stoichiometric molar ratio of Formula 2 described above.

The nickel source material is a material in which nickel positive ions and any negative ions are ion-bonded, and is not particularly limited as long as it is dissolvable in water and dissociated into positive ions and negative ions.

In addition, the dissimilar metal source material is a material in which positive ions of a metal other than nickel (e.g., Mn, Co, Al, etc.) and any negative ions are ion-bonded, and are not particularly limited as long as it is dissolvable in water and dissociated into positive ions and negative ions. For example, it may include one of a Co source material, a Mn source material, an Al source material, a Mg source material, a Zr source material, a Sn source material, a Ca source material, a Ge source material, a Ga source material, a B source material, a Ti source material, a Mo source material, a Nb source material, and a W source material, or a mixture of two or more thereof.

Second co-precipitation step (shell portion formation step)

In addition, in the second co-precipitation step, shell portions may be formed by using the particles precipitated in the first co-precipitation step as core portions to have a thickness of D1 from surfaces of the core portions and a molar content of nickel that gradually decreases in a thickness direction from interfaces with the surfaces of the core portions, and nickel-based metal hydroxide particles formed to include the core portion and the shell portion may be obtained.

An execution time of the second co-precipitation step may be determined by considering the execution time of the first co-precipitation step and a value of the second co-precipitation step.

The second metal salt aqueous solution used in the second co-precipitation step may be a mixture of a nickel source material, a dissimilar metal source material, and water so as to satisfy a stoichiometric molar ratio of Formula 3 described above.

The nickel source material and the dissimilar metal source material are as described above.

**Positive electrode active material**

An exemplary embodiment of the present invention provides a positive electrode active material for a lithium rechargeable battery, including: a core portion having a constant molar content of nickel; and a shell portion surrounding an outer surface of the core portion and having a concentration gradient in which a molar content of nickel gradually decreases in a direction from an interface with the core portion to an outermost portion thereof, wherein the positive electrode active material precursor includes a nickel-based lithium metal oxide particle having a value of 50 % or more of Formula 3:

$$[\text{Formula 3}] \quad R2/ (R2+D2)*100 \%$$

wherein, in Formula 3, R2 indicates a radius of the core portion in the nickel-based metal oxide particle, and D2 indicates a thickness of the shell portion in the nickel-based metal oxide particle.

The positive electrode active material according to the exemplary embodiment of the prevent invention may be prepared based on the positive electrode active material precursor described above. Accordingly, a description related to a CSG form of the positive electrode active material, a relationship between the radius of the core portion, and the thickness of the shell portion of the core portion (i.e., Formula 2) corresponds to the aforementioned description related to the positive electrode active material precursor.

Specifically, the positive electrode active material may be obtained by mixing the positive electrode active material precursor and the lithium source material, and additionally a doping source material if necessary, and then calcining them, and may include a plurality of nickel-based lithium metal oxide particles.

Accordingly, similar to the positive electrode active material precursor used as a source material, the positive electrode active material precursor 1) may have the CSG form in which the high concentration of nickel is constantly maintained in the core portion and the concentration of nickel is sharply reduced, and 2) the value of Formula 2 may be 50 % or more, 60 % or more, 70 % or more, or 75 % as in examples to be described below.

A detailed process will be described later, and a positive electrode active material including the nickel-based lithium metal hydroxide particles will now be described in detail.

Size and Gaussian distribution of nickel-based lithium metal oxide particles

The nickel-based lithium metal oxide particles may be a plurality of particles having a D50 particle size in a Gaussian distribution within a range of 10 to 30 $\mu$m.

Specifically, the particles of the D50 may be classified into particles having a diameter of 10 $\mu$m or more and less than 13 $\mu$m, particles having a diameter of 13 $\mu$m or more and less than 14 $\mu$m, and particles having a diameter of 14 $\mu$m or more and less than 15 $\mu$m.

Further, the classified particles of the D50 may have a uniform composition for each diameter. This is supported by a fact that, when the plurality of nickel-based lithium metal oxide particles are classified, a Gaussian distribution graph of each classified D50 particle size has a same tendency as a Gaussian distribution graph before being classified. A more concrete basis will be presented in evaluation examples described later.

Internal composition of nickel-based lithium metal oxide particle

Specifically, an average composition of the classified particles of the D50 for each diameter may be represented by Chemical Formula 4:

[Chemical Formula 4]      $Li_{1+m}[Ni_{1-w4-x4-y4-z4}Co_{w4}M1_{x4}M2_{y4}M3_{z4}]_{1-m}O_{2-p4}X_{p4}$

wherein, in Chemical Formula 4, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, each of w4, x4, y4, z4, and p4 may satisfy a following corresponding inequality: $0 < w4 \leq 0.2$, $0 < x4 \leq 0.2$, $0 \leq y4 \leq 0.1$, $0 \leq z4 \leq 0.1$, $0 < w4+x4+y4+z4 \leq 0.4$ and $0 \leq p1 \leq 0.1$, and m satisfies an inequality: $-0.05 \leq m \leq 0.25$.

An average molar content of nickel of 60 % or more for each of the D50 particle sizes that are classified indicates a high concentration.

For example, in Formula 4, M1 may be Mn, and following inequalities $0 < w4 \leq 0.1$, $0 < x4 \leq 0.1$, $y4 = z4 = p4 = 0$, and $0 < w4+x4+y4+z4 \leq 0.2$ may be satisfied.

Specifically, a composition of the core portion in the nickel-based lithium metal oxide particle may be represented by Chemical Formula 5 in an entire region:

[Chemical Formula 5]     $Li_{1+m}[Ni_{1-w5-x5-y5-z5}Co_{w5}M1_{x5}M2_{y5}M3_{z5}]_{1-m}O_{2-p5}X_{p5}$

wherein, in Chemical Formula 5, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, each of $w5$, $x5$, $y5$, $z5$, and $p5$ may satisfy a following corresponding inequality: $0 \leq w5 \leq 0.1$, $0 \leq x5 \leq 0.1$, $0 \leq y5 \leq 0.1$, $0 \leq z5 \leq 0.1$, $0 \leq w5+x5+y5+z5 \leq 0.2$, and $0 \leq p5 \leq 0.1$, and m satisfies an inequality: $-0.05 \leq m \leq 0.25$.

This indicates that the molar content of nickel in the entire region of the core portion in the nickel-based lithium metal oxide particle is 80 % or more, which is higher than the average composition.

For example, in Formula 5, M1 may be Mn, and following inequalities $0 < w5 \leq 0.05$, $0 < x5 \leq 0.05$, $y5 = z5 = p5 = 0$, and $0 < w5+x5+y5+z5 \leq 0.1$ may be satisfied.

In addition, a composition of the shell portion in the nickel-based lithium metal oxide particle may be represented by Formula 5 at the interface, and is represented by Formula 6 at the outermost portion, wherein molar contents of nickel (Ni), M1, M2, and M3 gradually change from the interface to the outermost portion:

[Chemical Formula 6]     $Li_{1+m}[Ni_{1-w6-x6-y6-z6}Co_{w6}M1_{x6}M2_{y6}M3_{z6}]_{1-m}O_{2-p6}X_{p6}$

wherein, in Chemical Formula 6, each of M1, M2, and M3 may be one element selected from the group consisting of Mn, Al, Mg, Zr, Sn, Ca, Ge, Ga, B, Ti, Mo, Nb, and W, X may be one element selected from the group consisting of F, N, and P, each of $w6$, $x6$, $y6$, $z6$, and $p6$ may satisfy a following corresponding inequality: $0 < w6 \leq 0.3$, $0 < x6 \leq 0.3$, $0 \leq y6 \leq 0.1$, $0 \leq z6 \leq 0.1$, $0 < w6+x6+y6+z6 \leq 0.5$, and $0 \leq p6 \leq 0.1$, and m satisfies an inequality: $-0.05 \leq m \leq 0.25$.

This indicates that the molar content of nickel is 80 % or more at the interface with the core portion and is 60 % or more in the outermost portion in the nickel-based lithium metal oxide particle, and having a concentration gradient in which the molar content of nickel gradually decreases from the interface to the outermost portion. In addition, the metals (i.e., M1, M2, and M3) other than nickel have a concentration gradient in which the molar content gradually increases from the interface to the outermost portion. For example, in Formula 6, M1 may be Mn, and following inequalities $0 < w6 \leq 0.25$, $0 < x6 \leq 0.25$, $y6 = z6 = p6 = 0$, and $0 < w6+x6+y6+z6 \leq 0.5$ may be satisfied.

The nickel-based lithium metal oxide particle may have a stable structure according to a composition of the shell portion of Formula 6 while accomplishing a high capacity according to a total composition of Formula 4 and a composition of the core portion of Formula 5.

Coating layer

Meanwhile, the positive electrode active material may further include: a coating layer configured to surround an outer surface of the shell portion and to contain at least one of an element of B, Mg, Zr, Al, Mn, Co, or a combination thereof; an oxide of the element; an amorphous compound thereof; a lithium ion conductive oxide thereof (e.g., lithium borate or lithium borosilicate); and a polymer thereof.

In this case, a material included in the coating layer may suppress direct contact between the nickel-based lithium metal oxide particles with the electrolyte, and a side reaction thereof.

**Preparation method of positive electrode active material**

An exemplary embodiment of the present invention provides a preparation method of a positive electrode active material for a lithium rechargeable battery, including: a preparation step of a first metal salt aqueous solution and a second metal salt aqueous solution, each of which contains a nickel source material, a dissimilar metal source material, and water, wherein molar concentrations of the nickel source material are different in the first metal salt aqueous solution and the second metal salt aqueous solution; a first co-precipitation step of forming a core portion by supplying the first metal salt aqueous solution to a reactor having a pH that is constantly maintained, to which a chelating agent is supplied; and a second co-precipitation step of forming a shell portion surrounding an outer surface of the core portion by gradually decreasing a supply rate of the first metal salt aqueous solution and by gradually increasing a supply rate of the second metal salt aqueous solution after the first co-precipitation step, wherein a nickel-based metal hydroxide particle including the core portion and the shell portion can be provided in the second co-precipitation step, and the first co-precipitation step and the second co-precipitation step are controlled to obtain a value of 12.5 % or more of Formula 2, and an obtaining step of a nickel-based lithium metal oxide particle by calcining a mixture of the nickel-based metal hydroxide particle and a lithium source material, after the second co-precipitation step:

$$[Formula\ 2]\ \log T1/\log (T1 + T2) \approx R1/(R1 + D1)$$

wherein, in Formula 2, T1 is an execution time of the first co-precipitation step, and T2 is an execution time of the second co-precipitation step.

According to the exemplary embodiment of the present invention, the preparation method of the positive electrode active material includes a series of steps of mixing the positive electrode active material precursor and the lithium source material, and additionally a doping source material if necessary, and then calcining them, as described above. Herein, a preparation method of the positive electrode active material precursor is the same as that described above.

Hereinafter, only steps after the second co-precipitation step will be described in order to exclude the description overlapping with that described above.

Calcining step (obtaining step of nickel-based lithium metal oxide particle)

A nickel-based lithium metal oxide particle is obtained by calcining a mixture of the nickel-based metal hydroxide particle and a lithium source material, after the second co-precipitation step.

In this case, as mentioned above, a doping source material may be added to the mixture, and the resultant nickel-based lithium metal oxide particle may include a dopant.

A calcining temperature may be in range of 700 to 800 °C, and a calcining time may be 12 to 20 hours, which is generally known.

Coating layer formation step

The preparation method may further include a forming step of a coating layer surrounding an outer surface of the nickel-based lithium metal oxide particle, after the obtaining step of the nickel-based lithium metal oxide particle.

Specifically, the forming step of the coating layer surrounding the outer surface of the nickel-based lithium metal oxide particle may include: a mixing step of the nickel-based lithium metal oxide particle and a coating source material; and a heat-treating step of a mixture of the nickel-based lithium metal oxide particle and a coating source material.

The coating source material may be a source material such as an element of B, Mg, Zr, Al, Mn, Co, or a combination thereof; an oxide of the element; an amorphous compound thereof; a lithium ion conductive oxide thereof (e.g., lithium borate or lithium borosilicate); and a polymer thereof.

The step of mixing the nickel-based lithium metal oxide particle and the coating source material is not limited to dry mixing or wet mixing.

**Lithium rechargeable battery**

An exemplary embodiment of the present invention provides a lithium rechargeable battery including: a positive electrode; a negative electrode; and an electrolyte.

This corresponds to a lithium rechargeable battery which exhibits excellent performance by including the above-described positive electrode active material, and the positive electrode active material has already been described in detail, so a detailed description will be omitted.

In addition, a configuration of a lithium rechargeable battery excluding the electrode positive active material is generally known.

DETAILED DESCRIPTION OF THE INVENTION

Hereinafter, preferred examples and experimental examples of the present invention will be described. However, the following examples are only an exemplary embodiment of the present invention, and the present invention is not limited to the following examples.

**Example 1 (Positive electrode active material precursor)**

1) Preparation of metal salt solution

First, two metal salt aqueous solutions having different Ni, Co, and Mn concentrations were prepared by using $NiSO_4 \cdot 6H_2O$ as a nickel source material, $CoSO_4 \cdot 7H_2O$ as a cobalt source material, and $MnSO_4 \cdot H_2O$ as a manganese source material.

A first metal salt aqueous solution for forming the core portion was prepared by mixing the source materials to satisfy a stoichiometric mole ratio of $(Ni_{0.98}Co_{0.01})(OH)_2$ in distilled water such that an entire molar concentration of the metal salt reached 2.5 M.

Independently, a second metal salt aqueous solution for forming the shell portion was prepared by mixing the source materials to satisfy a stoichiometric mole ratio of $(Ni_{0.64}Co_{0.23}Mn_{0.13})(OH)_2$ in distilled water such that an entire molar concentration of the metal salt reached 2.5 M.

2) Co-precipitation step

A co-precipitation reactor in which two metal salt aqueous solution supply tanks are connected in series was prepared, and the first metal salt aqueous solution and the second metal salt aqueous solution were charged into the respective metal salt aqueous solution supply tanks.

Three liters of distilled water was placed in the co-precipitation reactor (capacity of 20 L, output of a rotary motor of 200 W), nitrogen gas was supplied at a rate of 2 L/min to remove dissolved oxygen, and it was agitated at 140 rpm while maintaining a temperature of the reactor at 50 °C.

In addition, $NH_4(OH)$ of a 14 M concentration as a chelating agent and a NaOH solution of an 8 M concentration as a controlling agent were continuously injected at 0.06 L/hour and 0.1 l/hour, respectively, while they were appropriately controlled to maintain a pH inside the reactor at 12 during the process.

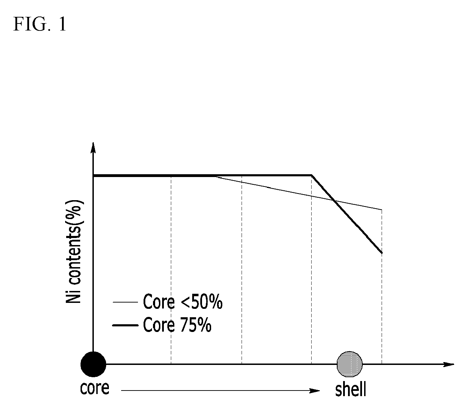

As such, in a reactor having a pH that is constantly maintained, to which a chelating agent is supplied, as indicated by "Core 75 %" in FIG. 1, a dosing time and amount of each metal salt solution were controlled from the two metal salt aqueous solution supply tanks connected in series.

Specifically, the co-precipitation reaction was performed until a diameter of the precipitate became about 11.1 $\mu m$ by adjusting an impeller speed of the reactor to 140 rpm while injecting the first metal salt aqueous solution at 0.4 L/hour. In this case, an average residence time of the solution in the reactor was adjusted to about 10 hours by adjusting a flow rate, and a co-precipitation compound having a slightly higher density was obtained by giving a steady state duration to the reactant after the reaction reached the steady state.

Subsequently, a total supplied solution was injected at 0.4 L/hour by varying a mixing ratio of the first metal salt aqueous solution and the second metal salt solution, to gradually decrease a supply rate of the first metal salt solution at 0.05 L/hour and to gradually increase a supply rate of the second metal salt solution at 0.35 L/hour. In this case, the average residence time of the solution in the reactor was adjusted to 20 hours or less by controlling the flow rate, and finally the co-precipitation reaction was performed until the diameter of the precipitate became 14.8 $\mu m$.

3) Post-treatment step

The precipitate obtained according to the series of co-precipitation steps was filtrated, washed with water, and then dried in an oven at 100 °C for 24 hours to obtain a plurality of particles having a composition of $(Ni_{0.88}Co_{0.095}Mn_{0.025})(OH)_2$ as the positive electrode active material precursor of Example 1.

**Example 2 (Positive electrode active material)**

The positive electrode active material precursor obtained in Example 1 and a lithium salt $LiOH.H_2O$ (Samchun Cheical Co., Ltd., battery grade) was mixed at a molar ratio of 1:1.05 (precursor: lithium salt), and the mixture was charged into a tube furnace (inner diameter: 50 mm, length: 1000 mm) and calcined while introducing oxygen at 200 mL/min.

In this case, the calcining condition was maintained at 480 °C for 5 h and then was maintained at 750 °C for 16 h, and a temperature rise speed was 5 °C/min. In addition, a powder of $ZrO_2$ was mixed as a doping material to uniformly distribute Zr in the inside of the particles during calcining, and after calcining, $H_3BO_3$ was dry-mixed and then heat treated to be uniformly coated on surfaces of particles of B.

Finally, a plurality of particles having surfaces coated with B at 800 ppm were obtained as an active material of Example 2, and a composition of the entire particles was $Li_{1.05}(Ni_{0.88}Co_{0.095}Mn_{0.025})_{0.996}Zr_{(0.004)}O_2$.

**Comparative Example 1 (Positive electrode active material precursor)**

1) Preparation of metal salt solution

The first metal salt aqueous solution for forming the core portion and the second metal salt aqueous solution for forming the shell portion were the same as those used in Example 1.

2) Co-precipitation step

In a same co-precipitation reactor as in Example 1, as indicated by "Core 50 %" in FIG. 1, a dosing time and amount of each metal salt solution were controlled from the two metal salt aqueous solution supply tanks connected in series.

Specifically, the co-precipitation reaction was performed until a diameter of the precipitate became about 6.5 $\mu$m by adjusting an impeller speed of the reactor to 140 rpm while injecting the first metal salt aqueous solution at 0.4 L/hour. In this case, an average residence time of the solution in the reactor was adjusted to about 5 hours by adjusting a flow rate, and a co-precipitation compound having a slightly higher density was obtained by giving a steady state duration to the reactant after the reaction reached the steady state.

Subsequently, a total supplied solution was injected at 0.4 L/hour by varying a mixing ratio of the first metal salt aqueous solution and the second metal salt solution, to gradually decreasing a supply rate of the first metal salt solution at 0.15 L/hour and to gradually increasing a supply rate of the second metal salt solution at 0.25 L/hour. In this case, the average residence time of the solution in the reactor was adjusted to 20 hours or less by controlling the flow rate, and finally the co-precipitation reaction was performed until the diameter of the precipitate became 13.5 $\mu$m.

3) Post-treatment step

The precipitate obtained according to the series of co-precipitation steps was post-treated in the same manner as in Example 1 to obtain a plurality of particles having a composition of $(Ni_{0.88}Co_{0.095}Mn_{0.025})(OH)_2$ as the positive electrode active material precursor of Comparative Example 1.

**Comparative Example 2 (Positive electrode active material)**

The active material precursor was subjected into the same steps as those of Example 2 to obtain a plurality of particles having surfaces coated with B at 800 ppm as an active material of Comparative Example 2, and a composition of the entire particles was $Li_{1.05}(Ni_{0.88}Co_{0.095}Mn_{0.025})_{0.996}Zr_{(0.004)}O_2$.

**Evaluation Example 1 (Analysis of particle size distribution of positive electrode active material)**

1 kg of each of positive electrode active materials of Example 2 and Comparative Example 2 was well dispersed in 2 kg of ethanol (99.9 %), and then a supernatant containing a large amount of relatively small-diameter particles was separated by a difference in weight per particle diameter, and classified by D50 particle size.

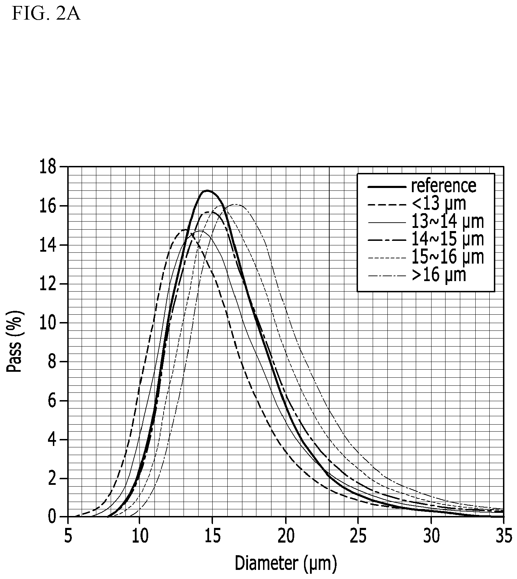

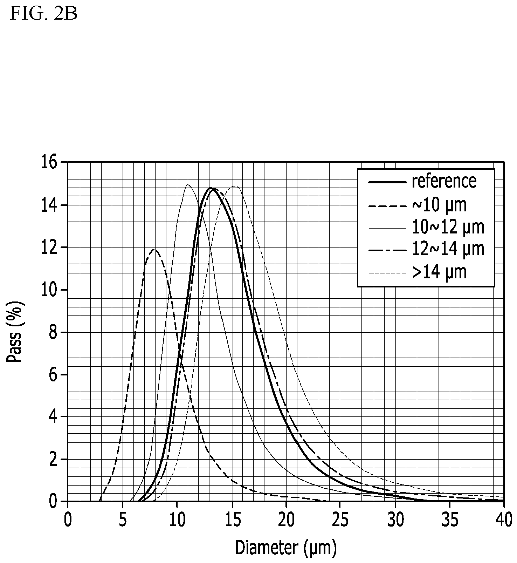

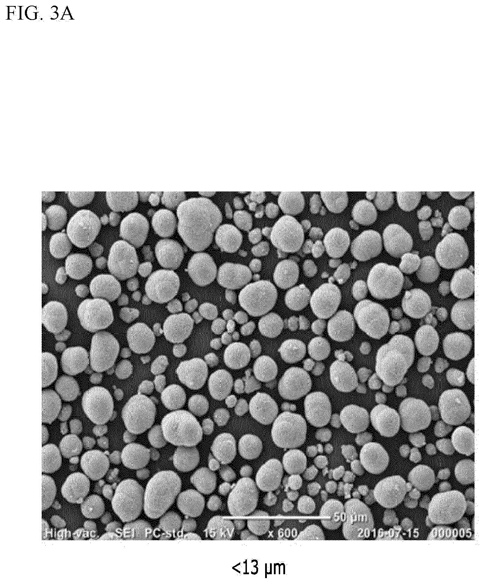

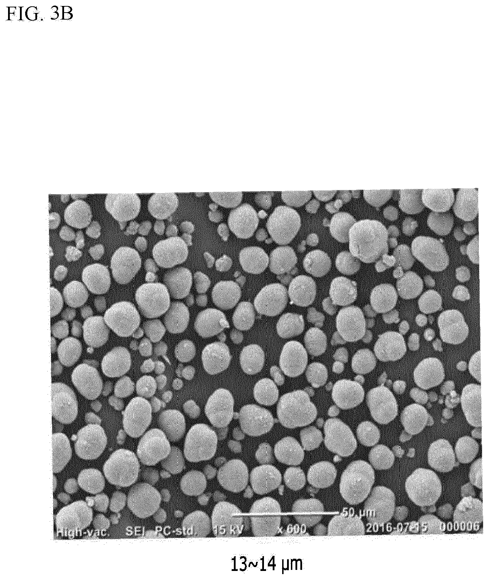

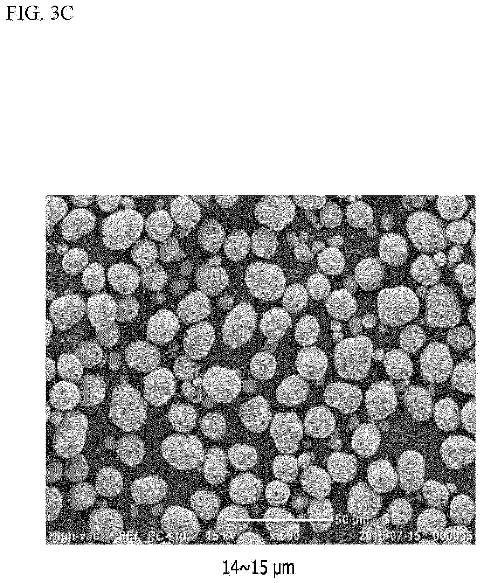

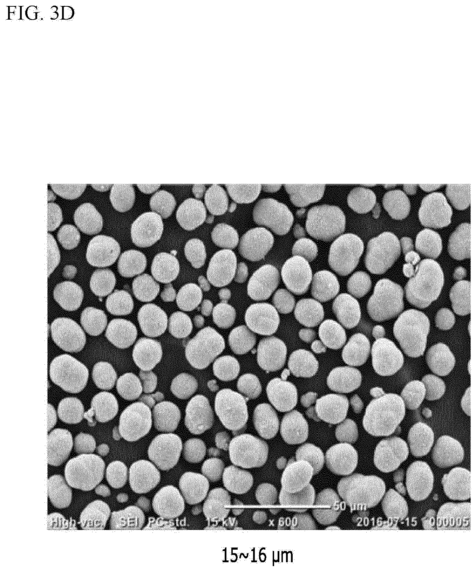

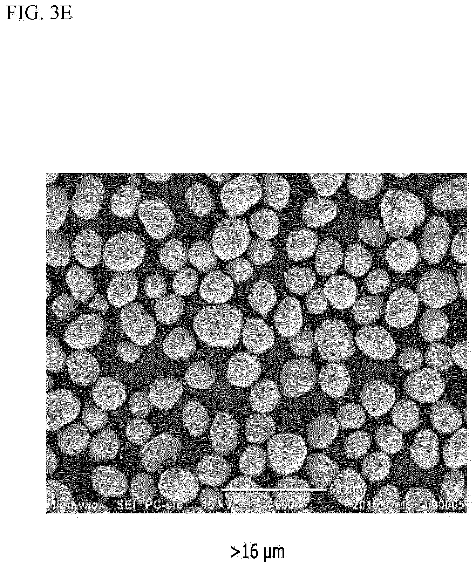

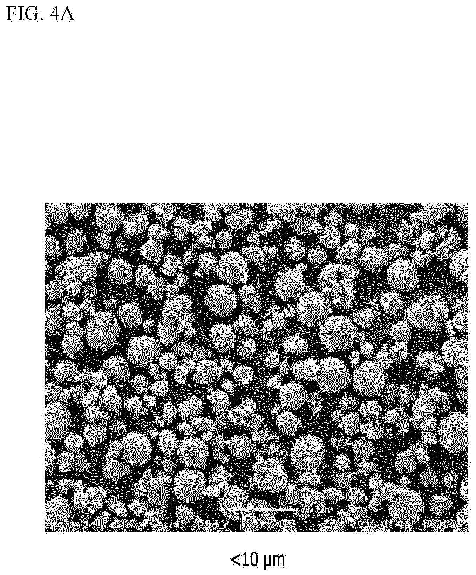

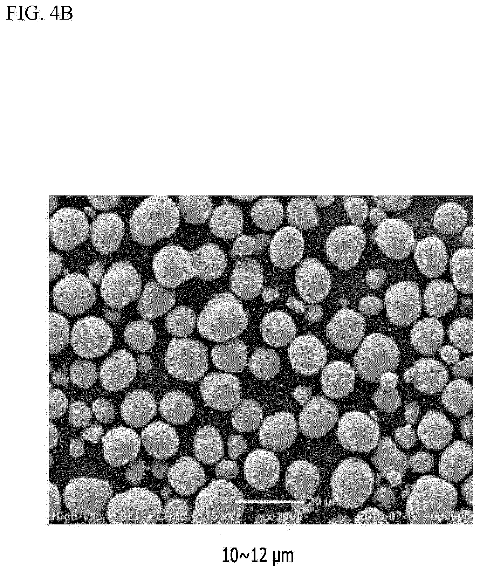

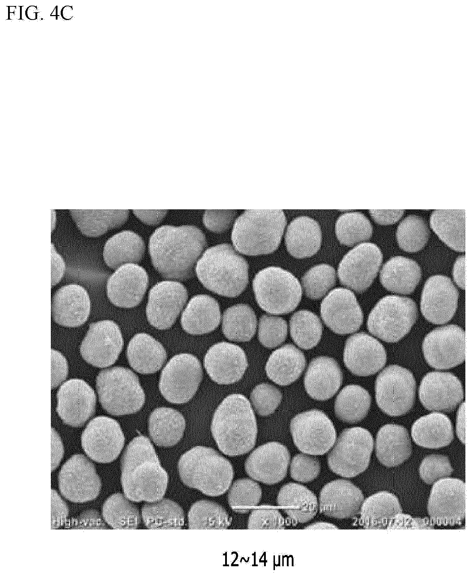

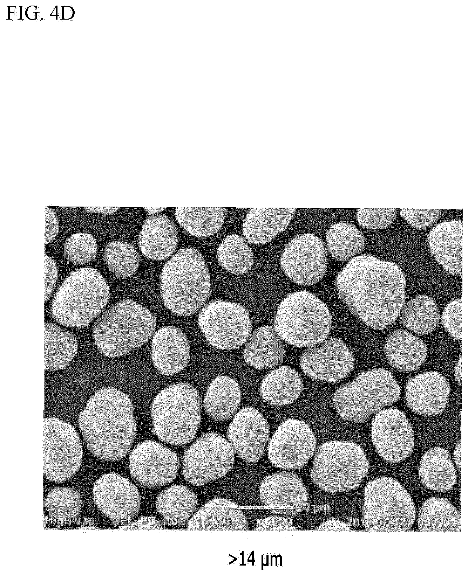

FIG. 2A and FIG. 2B respectively illustrate particle size analysis (PSA) results for each positive electrode active material in Example 2 and Comparative Example 2. FIG. 3 and FIG. 4 illustrate SEM photographs for each of the diameters classified in Example 2 and Comparative Example 2.

According to FIG. 2A and FIG. 3A to FIG. 3E, it can be seen that D50 particles of the positive electrode active material of Example 2 are classified into particles with a diameter of 10 $\mu$m or more and less than 13 $\mu$m (FIG. 3A),13 $\mu$m or more and less than 14 $\mu$m (FIG. 3B), 14 $\mu$m or more and less than 15 $\mu$m (FIG. 3C), 15 $\mu$m or more and less than 16 $\mu$m (Fig. 3D), and 16 $\mu$m or more and less than 30 $\mu$m (Fig.3E), showing a Gaussian distribution for each particle diameter. In this case, it can be seen that the Gaussian distribution represented by each particle diameter in Example 2 has the same tendency as the unclassified particles (indicated by "reference").

On the other hand, according to FIG. 2B and FIG. 4A to FIG. 4D, it can be seen that D50 particles of the positive electrode active material of Comparative Example 2 are classified into particles with a diameter of less than 10 $\mu$m (FIG. 4A), 10 $\mu$m or more and less than 12 $\mu$m (FIG. 4B), 12 $\mu$m or more and less than 14 $\mu$m (FIG. 4C), and 14 $\mu$m or more and less than 30 $\mu$m (FIG. 4D), showing a Gaussian distribution for each particle diameter. However, it can be seen that the Gaussian distribution represented by each particle diameter in Comparative Example 2 has a tendency that is different from the unclassified particles (indicated by reference).

**Evaluation Example 2 (Analysis of internal composition for each particle size of positive electrode active material)**

Tables 1 and 2 shows results of ICP measurement for each of the positive electrode active materials of Example 2 and Comparative Example 2.

Referring to Table 2, in the case of Comparative Example 2, a maximum compositional difference ($C_{max}-C_{min}$) is 3.3 %, which is a relatively high value, and compositional differences of Co and Mn are 1.4 and 1.0 %, which are relatively high values.

In addition, Zr, which is a dopant in Comparative Example 2, was found to be 4 times or more larger than the initial design value in particles having a diameter of less than 10 $\mu$m, and an amount of doping was decreased as the particle diameter was increased. The B coating was present only in particles with a diameter of less than 10 $\mu$m, but not in particles with a diameter of 10 $\mu$m or more.

On the other hand, in the case of Example 2, the maximum composition difference of Ni is 1.71 %, which is half of that of Comparative Example 2, and the composition difference between Co and Mn is relatively small. This is because the radius of the core portion was controlled to 75 % of the particle radius.

In addition, in Example 2, it can be seen that Zr and B are uniformly present regardless of the diameter of the particle. However, a decrease in Zr and B by a small amount compared to an initial design value is due to partial dissolution of ethanol in the classification.

(Table 1)

| Unit | | Before classified ($\mu$m) | After classified ($\mu$m) (In parentheses, D50) | | | | | Maximum composition difference ($C_{max}-C_{min}$) |
|---|---|---|---|---|---|---|---|---|
| | | 14.21 | <13 | 13-14 | 14-15 | 15-16 | >16 | |
| | | | (12.76) | (13.71) | (14.47) | (15.31) | (16.22) | |
| Ni % | mol% | 88.43 | 87.56 | 87.97 | 88.47 | 88.94 | 89.27 | 1.71 |
| Co % | mol% | 9.35 | 10.04 | 9.71 | 9.32 | 8.94 | 8.7 | 1.34 |
| Mn % | mol % | 2.22 | 2.4 | 2.32 | 2.21 | 2.12 | 2.03 | 0.37 |
| Zr | ppm | 2,121 | 2622 | 2462 | 2101 | 1878 | 1780 | |
| B | ppm | 777 | 480 | 521 | 471 | 442 | 447 | |

(Table 2)

| Unit | | Before classified ($\mu$m) | After classified ($\mu$m) (In parentheses, D50) | | | | Maximum compositional difference ($C_{max}-C_{min}$) |
|---|---|---|---|---|---|---|---|
| | | 12.97 | <10 | 10-12 | 12-14 | >14 | |
| | | | (7.45) | (11.00) | (13.42) | (14.93) | |
| Ni | mol% | 88.30 | 87.0 | 87.56 | 89.3 | 90.30 | 3.30 |
| Co | mol% | 9.20 | 10.10 | 9.85 | 8.97 | 8.7 | 1.40 |
| Mn | mol% | 2.50 | 2.52 | 2.47 | 2.44 | 2.42 | 1.0 |
| Zr | ppm | 4,400 | 17,870 | 5839 | 3247 | 2959 | |
| B | ppm | 610 | 550 | 0 | 0 | 0 | |

**Evaluation Example 3 (Charging/discharging capacity analysis of cell for each particle size of positive electrode active material particle size)**

Tables 3 and 4 show results of charging/discharging capacity analysis in each case in which batteries are manufactured by applying each of the positive electrode active materials before and after classification in Evaluation Example 2.

To this end, PVDF (polyvinylidene fluoride) as a binder and DENKA BLACK (commercial name: Super P) as a conductive material were mixed in a ratio of 94:3:3 (active material: binder: conductive material), followed by coating with an aluminum current collector, and then followed by drying and roll pressing to form an electrode.

Lithium metal (Li-metal) was used as a counter electrode, and an electrolyte solution obtained by dissolving a solution of 1 mol of $LiPF_6$ in a mixed solvent of ethylene carbonate (EC): dimethyl carbonate (DMC) in a volume ratio of 1:2 was used.

2032 half-coin cells were manufactured using the above-described constituent elements according to a usual manufacturing method.

Each cell was subjected to an initial charge (4.25 V) and a discharge (2.5 V) at room temperature of 25 °C under a constant current condition of 0.1 C, followed by a charge/discharge at 0.2 C, wherein charge capacity and discharge capacity are shown in Tables 3 and 4, respectively. In this case, when it reaches a charge end voltage, the charge end voltage is maintained, and when it reaches a current amount of 1/20 C, a mode is switched to a discharge mode.

Results of charging/discharging cycles under these conditions are shown in Tables 3 and 4. The results in Tables 3 and 4 relate to the results in Tables 1 and 2.

Specifically, according to Table 4, it can be seen that a deviation between the charge capacity and the discharge capacity greatly differs due to the difference of the Ni content per particle diameter in Comparative Example 2. Particularly, in Comparative Example 2 having a particle diameter of less than 10 $\mu$m, the discharge capacity of the cell was drastically reduced, because Zr, which is a dopant, was intensively included as shown in Table 2. Generally, Zr helps to improve thermal stability, while there is a disadvantage that capacity increases when an amount of doping increases.

On the other hand, according to Table 3, when the particle diameter of Example 2 is less than 13 $\mu$m, the discharge capacity is 210.73 mAh/g at a minimum, and when the particle diameter is more than 16 $\mu$m, the maximum discharge capacity is 216.89 mAh/g, which shows that the deviation is small.

(Table 3)

|  | Charge capacity (mAh/g) | Discharge capacity (mAh/g) | Initial efficiency (%) |
|---|---|---|---|
| Before classified (D50 14.21 $\mu$m) | 236.63 | 215.20 | 90.94 |
| <13 $\mu$m | 236.19 | 210.73 | 89.22 |
| 13-14 $\mu$m | 236.79 | 213.05 | 89.97 |
| 14-15 $\mu$m | 238.79 | 213.78 | 89.53 |
| 15-16 $\mu$m | 239.35 | 214.07 | 89.44 |
| >16 $\mu$m | 244.58 | 216.89 | 88.68 |

(Table 4)

|  | Charge capacity (mAh/g) | Discharge capacity (mAh/g) | Initial efficiency (%) |
|---|---|---|---|
| Before classified (D50 12.97 $\mu$m) | 238.20 | 214.70 | 90.13 |
| <10 $\mu$m | 226.58 | 203.45 | 89.79 |
| 10-12 $\mu$m | 234.64 | 210.57 | 89.74 |
| 12-14 $\mu$m | 242.94 | 216.68 | 89.19 |
| >14 $\mu$m | 243.63 | 218.00 | 89.48 |

**Evaluation Example 4 (Analysis of cycle-life characteristic of cell for each particle size of positive electrode active material)**

Tables 5 and 6 show results of cycle-life characteristic analysis in each case in which cells are manufactured by applying each of the positive electrode active materials before and after classification in Evaluation Example 2.

Each cell was manufactured in the same manner as in Evaluation Example 3, and a charge and discharge cycle was performed 30 times at a constant charge rate of 0.3 C for each cell. Results of charging/discharging cycles at room temperature of 25 °C are shown in Tables 5 and 6.

According to Table 6, in the case of Comparative Example 2, a deviation of the initial capacity for each particle diameter was significant, and in the case of a relatively small diameter, a retention ratio of the capacity after 30 cycles was high, whereas in the case of the diameter of less than 14 $\mu$m, a decrease in the capacity was significant.

On the other hand, according to Table 5, the deviation of the initial discharge capacity for each particle diameter of Example 2 was relatively small, and a very good capacity retention rate was confirmed as 93 to 96 % even after 30 cycles.

(Table 5)

| | Initial discharge capacity (mAh/g) @ 0.3 C | After 30 cycles (mAh/g) @0.3 C | Cycle efficiency % |
|---|---|---|---|
| Before classified (D50 14.21 μm) | 209.06 | 200.62 | 95.96 |
| < 13 | 205.07 | 195.36 | 95.26 |
| 13-14 | 206.48 | 196.38 | 95.11 |
| 14-15 | 206.44 | 195.76 | 94.83 |
| 15-16 | 206.76 | 193.58 | 93.63 |

(Table 6)

| | Initial discharge capacity (mAh/g) @0.3C | After 30 cycles (mAh/g) @0.3C | Cycle efficiency (%) |
|---|---|---|---|
| Before classified (D50 12.97 μm) | 208.82 | 198.84 | 95.22 |
| < 10 μm | 197.55 | 192.30 | 97.34 |
| 10-12 μm | 203.52 | 192.65 | 94.66 |
| 12-14 μm | 210.23 | 191.16 | 90.93 |
| > 14 μm | 212.45 | 188.38 | 88.67 |

**Evaluation Example 5 (DSC thermal analysis of positive electrode active material)**

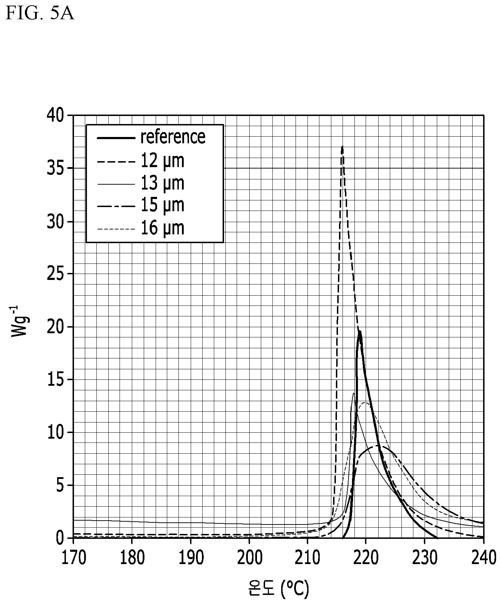

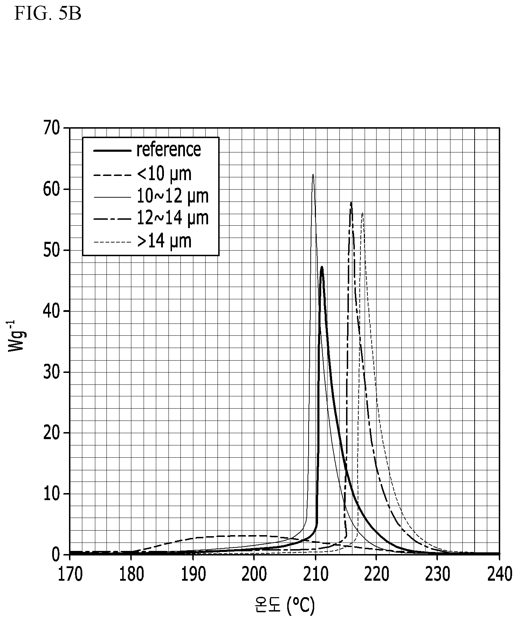

Thermal characteristics of the positive electrode active materials before and after the classification in Example 2 and Comparative Example 2 were measured with a differential scanning calorimeter (DSC), and results thereof are shown in Tables 7 and 8 and FIG. 5A and FIG. 5B.

Referring to FIG. 5B and Table 8, it can be seen that a peak temperature of the DSC varies relatively greatly depending on the particle diameters in Comparative Example 2. Particularly, the peak temperature of the particles having a diameter of less than 10 μm was significantly lowered to 195.8 °C as shown in Table 8, but an exothermic peak was extremely suppressed to 90.6 J/g. This is due to the fact that a doping amount of Zr contributing to improving the thermal stability is much higher than that of particles having different diameters. In addition, as the particle size of the classified particles was increased, both a crystallization onset temperature and the peak temperature gradually increased depending on a result of DSC measurement.

In addition, when the particle size increases, an average mol% of Ni increases as shown in Table 2, and thus an exothermic characteristic depending on the DSC measurement should be relatively decreased, but both the crystallization onset temperature and the peak temperature are increased. As a result, it can be expected that when the particle size is increased, a concentration gradient of a shell surface portion is more rapidly formed.

On the other hand, referring to FIG. 5A and Table 7, the measured peak temperature was almost uniform with no large difference according to the particle diameter in Example 2. Particularly, in Example 2, it can be seen that both the crystallization onset temperature and the peak temperature are high compared to each similar particle diameter. In particular, it should be noted that a heat-generation amount of Example 2 is significantly reduced as compared with Comparative Example 2.

Therefore, from the DSC measurement result, it can be confirmed that Example 2 is significantly improved in thermal quality compared with Comparative Example 2.

(Table 7)

| Example 2 | Crystallization onset temperature (Onset temperature) (°C) | Peak temperature (Peak temperature) (°C) | Heat-generation amount (J/g) |
|---|---|---|---|
| Before classified (D50 14.21 μm) | 216.1 | 219.4 | 495 |

(continued)

| Example 2 | Crystallization onset temperature (Onset temperature) (°C) | Peak temperature (Peak temperature) (°C) | Heat-generation amount (J/g) |
|---|---|---|---|
| 12 μm | 214.1 | 216.1 | 925 |
| 13 μm | 215.3 | 219.2 | 437 |
| 15 μm | 212.5 | 221.3 | 213 |
| 16 μm | 212.5 | 220.4 | 350 |

(Table 8)

| Comparative Example 2 | Crystallization initiation temperature (Onset temperature) (°C) | Peak temperature (Peak temperature) (°C) | Heat-generation amount (J/g) |
|---|---|---|---|
| Before classified (D50 12.97 μm) | 203.5 | 210.8 | 724.8 |
| < 10 μm | 178.4 | 195.8 | 90.6 |
| 10-12 μm | 205.3 | 209.3 | 936.2 |
| 12-14 μm | 209.7 | 216.2 | 875.8 |
| > 14 μm | 210.5 | 217.5 | 845.6 |

**Evaluation Example 6 (Measurement of DC-IR increase rate of positive electrode active material)**

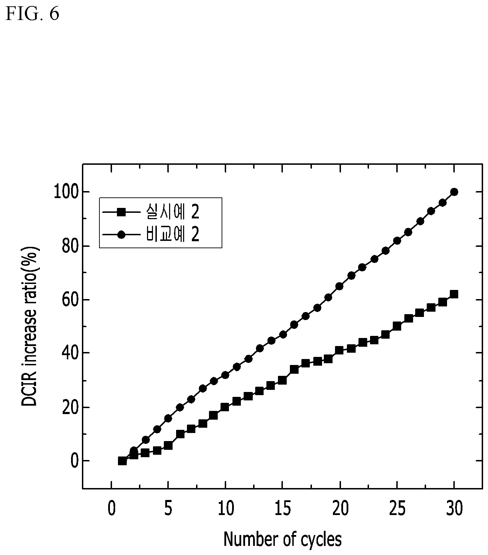

A direct current internal resistance (DC-IR) according to performance of the charge and discharge cycle was measured using the positive electrode active materials before classification in Example 2 and Comparative Example 2, and an IC-IR increase rate is shown in FIG. 6. DC-IR is an index of the possibility of high-speed charge depending on the cycle performance, and recently it is strictly controlled as a positive electrode material specification in the manufacture of battery for electric vehicles.

This DC-IR characteristic may be allowed to clearly distinguish an effect when measured at a high temperature.

Therefore, it was measured in a constant-temperature chamber maintained at 45 °C, and as the charging and discharging cycles proceeded, the voltage was measured 60 seconds after a discharge current was applied assuming that a 4.25 V charge was a fully charged state (100 %).

Thereafter, an initial DC-IR value was converted into 0, and after 30 cycles, the increase rate of the DC-IR value was expressed as a percentage.

As in Comparative Example 2, when a retention time of the co-precipitation step for forming the core portion is shortened, a difference in the concentration of nickel is formed greatly depending on the particle size. As a result, it can be seen that the DC-IR increase rate is greatly increased by 30 times to about 100 % in a characteristic evaluation of the lithium rechargeable battery using the positive electrode active material of Comparative Example 2.

On the other hand, in the case of Example 2, it can be seen that even after 30 cycles of charging and discharging, the increase rate of the DC-IR value is about 60 %, which is significantly reduced as compared with Comparative Example 2.

Accordingly, It can be seen that when the positive electrode active material in which a length of the core portion is increased and having a concentration gradient in which the molar content of the shell portion is rapidly reduced is applied, it is very effective in manifesting performance of the lithium rechargeable battery.

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, it is to be understood that the above-described exemplary embodiments are for illustrative purposes only and the scope of the present invention is not limited thereto.

**Claims**

1. A positive electrode active material precursor for a lithium rechargeable battery, comprising:

   a core portion having a constant molar content of nickel; and
   a shell portion surrounding an outer surface of the core portion and having a concentration gradient in which a molar content of nickel gradually decreases in a direction from an interface with the core portion to an outermost portion thereof,
   wherein the positive electrode active material precursor includes a nickel-based metal hydroxide particle having a value of 50 % or more of Formula 1:

   [Formula 1]

   $$R1/ (R1+D1)*100 \%$$

   wherein, in Formula 1, R1 indicates a radius of the core portion in the nickel-based metal hydroxide particle, and D1 indicates a thickness of the shell portion in the nickel-based metal hydroxide particle.

2. The positive electrode active material precursor of claim 1, wherein
   the nickel-based metal hydroxide particle
   is a large particle-diameter active material precursor particle having a D50 of 10 to 30 $\mu$m.

3. The positive electrode active material precursor of claim 2, wherein
   an average composition of the nickel-based metal hydroxide particle is represented by Chemical Formula 1:

   [Chemical Formula 1]  $Ni_{1-w1-x1-y1-z1}Co_{w1}M1_{x1}M2_{y1}M3_{z1}(OH)_{2-p1}X_{p1}$

   wherein, in Chemical Formula 1,

   each of M1, M2, and M3 is one element selected from the group consisting of Mn, Al, Mg, Zr, Sn, Ca, Ge, Ga, B, Ti, Mo, Nb, and W,
   X is one element selected from the group consisting of F, N, and P, and
   each of w1, x1, y1, z1, and p1 satisfies a following corresponding inequality: $0 < w1 \leq 0.2$, $0 < x1 \leq 0.2$, $0 \leq y1 \leq 0.1$, $0 \leq z1 \leq 0.1$, $0 < w1+x1+y1+z1 \leq 0.4$, and $0 \leq p1 \leq 0.1$.

4. The positive electrode active material precursor of claim 3, wherein
   a composition of the core portion in the nickel-based metal hydroxide particle
   is represented by Chemical Formula 2 in an entire region:

   [Chemical Formula 2]  $Ni_{1-w2-x2-y2-z2}Co_{w2}M1_{x2}M2_{y2}M3_{z2}(OH)_{2-p2}X_{p2}$

   wherein, in Chemical Formula 2,

   each of M1, M2, and M3 is one element selected from the group consisting of Mn, Al, Mg, Zr, Sn, Ca, Ge, Ga, B, Ti, Mo, Nb, and W,
   X is one element selected from the group consisting of F, N, and P, and
   each of w2, x2, y2, z2, and p2 satisfies a following corresponding inequality: $0 \leq w2 \leq 0.1$, $0 \leq x2 \leq 0.1$, $0 \leq y2 \leq 0.1$, $0 \leq z2 \leq 0.1$, $0 \leq w2+x2+y2+z2 \leq 0.2$, and $0 \leq p2 \leq 0.05$.

5. The positive electrode active material precursor of claim 4, wherein
   a composition of the shell portion in the nickel-based metal hydroxide particle
   is represented by Formula 2 at the interface, and is represented by Formula 3 at the outermost portion, wherein molar contents of nickel (Ni), M1, M2, and M3 gradually change from the interface to the outermost portion:

   [Chemical Formula 3]  $Ni_{1-w3-x3-y3-z3}Co_{w3}M1_{x3}M2_{y3}M3_{z3}(OH)_{2-p3}X_{p3}$

   wherein, in Chemical Formula 3,

each of M1, M2, and M3 is one element selected from the group consisting of Mn, Al, Mg, Zr, Sn, Ca, Ge, Ga, B, Ti, Mo, Nb, and W,

X is one element selected from the group consisting of F, N, and P, and

each of w3, x3, y3, z3, and p3 satisfies a following corresponding inequality: $0 < w3 \leq 0.3$, $0 < x3 \leq 0.3$, $0 \leq y3 \leq 0.1$, $0 \leq z3 \leq 0.1$, $0 < w3+x3+y3+z3 \leq 0.5$, and $0 \leq p3 \leq 0.1$.

6. The positive electrode active material precursor of claim 1, wherein
a value of Formula 1 is greater than or equal to 75 %.

7. A preparation method of a positive electrode active material precursor for a lithium rechargeable battery, the method comprising:

a preparation step of a first metal salt aqueous solution and a second metal salt aqueous solution, each of which contains a nickel source material, a dissimilar metal source material, and water, wherein molar concentrations of the nickel source material are different in the first metal salt aqueous solution and the second metal salt aqueous solution;

a first co-precipitation step of forming a core portion by supplying the first metal salt aqueous solution to a reactor having a pH that is constantly maintained, to which a chelating agent is supplied; and

a second co-precipitation step of forming a shell portion surrounding an outer surface of the core portion by gradually decreasing a supply rate of the first metal salt aqueous solution and by gradually increasing a supply rate of the second metal salt aqueous solution, after the first co-precipitation step,

wherein a nickel-based metal hydroxide particle including the core portion and the shell portion is provided in the second co-precipitation step, and the first co-precipitation step and the second co-precipitation step are controlled to obtain a value of 50 % or more of Formula 1 for the obtained nickel-based metal hydroxide particle:

[Formula 1]

$$R1/ (R1+D1)*100 \%$$

wherein, in Formula 1, R1 indicates a radius of the core portion in the nickel-based metal hydroxide particle, and D1 indicates a thickness of the shell portion in the nickel-based metal hydroxide particle.

8. The preparation method of claim 7, wherein
the first co-precipitation step and the second co-precipitation step are controlled to satisfy Formula 2:

[Formula 2]

$$\log T1/\log (T1 + T2) \approx R1/(R1 + D1)$$

wherein, in Formula 2, T1 is an execution time of the first co-precipitation step, and T2 is an execution time of the second co-precipitation step.

9. The preparation method of claim 8, wherein
the first co-precipitation step
is performed for 10 hours or more.

10. The preparation method of claim 9, wherein
in the first co-precipitation step
particles having a radius of R1 from a center and a constant molar content of nickel in the entire region are precipitated.

11. The preparation method of any one of claim 7 to claim 10, wherein
in the second co-precipitation step,
shell portions are formed by using the particles precipitated in the first co-precipitation step as core portions to have a thickness of R2 from surfaces of the core portions and a molar content of nickel that gradually decreases in a thickness direction from interfaces with the surfaces of the core portions, and

nickel-based metal hydroxide particles formed to include the core portion and the shell portion are obtained.

**12.** A positive electrode active material for a lithium rechargeable battery, comprising:

a core portion having a constant molar content of nickel; and
a shell portion surrounding an outer surface of the core portion and having a concentration gradient in which a molar content of nickel gradually decreases in a direction from an interface with the core portion to an outermost portion thereof,
wherein the positive electrode active material precursor includes a nickel-based lithium metal oxide particle having a value of 50 % or more of Formula 3:

[Formula 3]

$$R2/ (R2+D2)*100 \%$$

wherein, in Formula 3, R2 indicates a radius of the core portion in the nickel-based metal oxide particle, and D2 indicates a thickness of the shell portion in the nickel-based metal oxide particle.

**13.** The positive electrode active material of claim 12, wherein
the nickel-based lithium metal oxide particle
is a large particle-diameter active material particle having a D50 of 10 to 30 $\mu$m.

**14.** The positive electrode active material precursor of claim 13, wherein
the nickel-based lithium metal oxide particle includes a plurality of nickel-based lithium metal oxide particles, and the particles of the D50 are classified into particles having a diameter of 10 $\mu$m or more and less than 13 $\mu$m, particles having a diameter of 13 $\mu$m or more and less than 14 $\mu$m, and particles having a diameter of 14 $\mu$m or more and less than 15 $\mu$m.

**15.** The positive electrode active material precursor of claim 14, wherein
the classified particles of the D50 have a uniform composition for each diameter.

**16.** The positive electrode active material of claim 15, wherein
an average composition of the classified particles of the D50 for each diameter
is represented by Chemical Formula 4:

[Chemical Formula 4]     $Li_{1+m}[Ni_{1-w4-x4-y4-z4}Co_{w4}M1_{x4}M2_{y4}M3_{z4}]_{1-m}O_{2-p4}Xp_4$

wherein, in Chemical Formula 4,

each of M1, M2, and M3 is one element selected from the group consisting of Mn, Al, Mg, Zr, Sn, Ca, Ge, Ga, B, Ti, Mo, Nb, and W,
X is one element selected from the group consisting of F, N, and P, and
each of w4, x4, y4, z4, and p4 satisfies a following corresponding inequality: $0 < w4 \leq 0.2$, $0 < x4 \leq 0.2$, $0 \leq y4 \leq 0.1$, $0 \leq z4 \leq 0.1$, $0 < w4+x4+y4+z4 \leq 0.4$, and $0 \leq p1 \leq 0.1$, and
m satisfies an inequality: $-0.05 \leq m \leq 0.25$.

**17.** The positive electrode active material of claim 16, wherein
a composition of the core portion of the classified particles of the D50 for each diameter
is represented by Chemical Formula 5 in an entire region:

[Chemical Formula 5]     $Li_{1+m}[Ni_{1-w5-x5-y5-z5}Co_{w5}M1_{x5}M2_{y5}M3_{z5}]_{1-m}O_{2-p5}X_{p5}$

wherein, in Chemical Formula 5,

each of M1, M2, and M3 is one element selected from the group consisting of Mn, Al, Mg, Zr, Sn, Ca, Ge, Ga, B, Ti, Mo, Nb, and W,
X is one element selected from the group consisting of F, N, and P, and
each of w5, x5, y5, z5, and p5 satisfies a following corresponding inequality: $0 \leq w5 \leq 0.1$, $0 \leq x5 \leq 0.1$, $0 \leq y5 \leq 0.1$, $0 \leq z5 \leq 0.1$, $0 \leq w5+x5+y5+z5 \leq 0.2$, and $0 \leq p5 \leq 0.1$, and

m satisfies an inequality: -0.05 ≤ m ≤ 0.25.

18. The positive electrode active material of claim 17, wherein
a composition of the shell portion of the classified particles of the D50 for each diameter
is represented by Formula 5 at the interface, and is represented by Formula 6 at the outermost portion, wherein molar contents of nickel (Ni), M1, M2, and M3 gradually change from the interface to the outermost portion:

[Chemical Formula 6]     $Li_{1+m}[Ni_{1-w6-x6-y6-z6}Co_{w6}M1_{x6}M2_{y6}M3_{z6}]_{1-m}O_{2-p6}X_{p6}$

wherein, in Chemical Formula 6,

each of M1, M2, and M3 is one element selected from the group consisting of Mn, Al, Mg, Zr, Sn, Ca, Ge, Ga, B, Ti, Mo, Nb, and W,
X is one element selected from the group consisting of F, N, and P, and
each of w6, x6, y6, z6, and p6 satisfies a following corresponding inequality: $0 < w6 \leq 0.3$, $0 < x6 \leq 0.3$, $0 \leq y6 \leq 0.1$, $0 \leq z6 \leq 0.1$, $0 < w6+x6+y6+z6 \leq 0.5$, and $0 \leq p6 \leq 0.1$, and
m satisfies an inequality: -0.05 ≤ m ≤ 0.25.

19. The positive electrode active material of any one of claim 12 to claim 18, wherein
a value of Formula 2 is greater than or equal to 75 %.

20. The positive electrode active material of any one of claim 12 to claim 18, further comprising
a coating layer configured to surround an outer surface of the shell portion and to contain at least one of an element of B, Mg, Zr, Al, Mn, Co, or a combination thereof; an oxide of the element; an amorphous compound thereof; a lithium ion conductive oxide thereof; and a polymer thereof.

21. A preparation method of a positive electrode active material for a lithium rechargeable battery, the method comprising:

a preparation step of a first metal salt aqueous solution and a second metal salt aqueous solution, each of which contains a nickel source material, a dissimilar metal source material, and water, wherein molar concentrations of the nickel source material are different in the first metal salt aqueous solution and the second metal salt aqueous solution;
a first co-precipitation step of forming a core portion by supplying the first metal salt aqueous solution to a reactor having a pH that is constantly maintained, at a constant rate;
a second co-precipitation step of forming a shell portion surrounding an outer surface of the core portion by gradually decreasing a supply rate of the first metal salt aqueous solution and by gradually increasing a supply rate of the second metal salt aqueous solution, after the first co-precipitation step,
wherein a nickel-based metal hydroxide particle including the core portion and the shell portion in the second co-precipitation step, and
the first co-precipitation step and the second co-precipitation step are controlled to obtain a value of 50 % or more of Formula 1 for the obtained nickel-based metal hydroxide particle; and
an obtaining step of a nickel-based lithium metal oxide particle by calcining a mixture of the nickel-based metal hydroxide particle and a lithium source material, after the second co-precipitation step:

[Formula 1]

R1/ (R1+D1)*100 %

wherein, in Formula 1, R1 indicates a radius of the core portion in the nickel-based metal hydroxide particle, and D1 indicates a thickness of the shell portion in the nickel-based metal hydroxide particle.

22. The preparation method of claim 21, wherein
the dissimilar metal source material
includes one of a Co source material, a Mn source material, an Al source material, a Mg source material, a Zr source material, a Sn source material, a Ca source material, a Ge source material, a Ga source material, a B source material, a Ti source material, a Mo source material, a Nb source material, and a W source material, or a mixture of two or more thereof.

**23.** The preparation method of claim 21 or claim 20, further comprising,
after the obtaining step of the nickel-based lithium metal oxide particle,
a forming step of a coating layer surrounding an outer surface of the nickel-based lithium metal oxide particle.

**24.** The preparation method of claim 23, wherein
the forming step of the coating layer surrounding the outer surface of the nickel-based lithium metal oxide particle includes:

a mixing step of the nickel-based lithium metal oxide particle and a coating source material; and
a heat-treating step of a mixture of the nickel-based lithium metal oxide particle and a coating source material

**25.** A lithium rechargeable battery, comprising:

a positive electrode;
a negative electrode; and
an electrolyte,
wherein the positive electrode includes the positive electrode active material for a lithium rechargeable battery according to claim 12.

FIG. 1

FIG. 2A

FIG. 2B

FIG. 3A

<13 μm

FIG. 3B

13~14 μm

FIG. 3C

14~15 μm

FIG. 3D

15~16 μm

FIG. 3E

>16 µm

FIG. 4A

<10 μm

FIG. 4B

10~12 μm

FIG. 4C

12~14 μm

FIG. 4D

>14 µm

FIG. 5A

FIG. 5B

FIG. 6